**Europäisches Patentamt**

**European Patent Office**

**Office européen des brevets**

(19)

(11) Veröffentlichungsnummer: **0 342 508**
**A1**

(12) ## EUROPÄISCHE PATENTANMELDUNG

(21) Anmeldenummer: **89108421.2**

(22) Anmeldetag: **10.05.89**

(51) Int. Cl.⁴: **F02P 7/06 , G01M 15/00**

(30) Priorität: **16.05.88 DE 3816643**

(43) Veröffentlichungstag der Anmeldung:
**23.11.89 Patentblatt 89/47**

(84) Benannte Vertragsstaaten:
**DE ES FR GB IT**

(71) Anmelder: **Siemens Aktiengesellschaft**
**Wittelsbacherplatz 2**
**D-8000 München 2(DE)**

(72) Erfinder: **Glehr, Manfred, Dipl.-Ing.**
**Gartenweg 8**
**D-8330 Eggenfelden(DE)**

(54) **Verfahren zum Erzeugen von Auslöseimpulsen.**

(57) Bei einem Verfahren zum Erzeugen von Auslöseimpulsen (A), die einen periodischen Vorgang einer Brennkraftmaschine steuern, wird die Vorausberechnung einer Rechenlaufzeit $T_{n+1}$ benötigt, die die Kurbelwelle der Brennkraftmaschine braucht, um den jeweils nächsten von vorgegebenen konstanten Vorgabebereichen $WB_n$ zu durchlaufen. Für diese Vorausberechnung wird eine Echtlaufzeit $TE_n$ nach jedem Durchlaufen eines der Vorgabebereiche $WB_n$ gemessen und die nächstfolgende Laufzeit durch eine Näherung vorausberechnet. Der vorausberechnete Wert dieser Rechenlaufzeit $T_{n+1}$ ergibt sich dabei aus
$$T_{n+1} = TE_n - K_n \text{ und } K_n = 1/2 \times (T_n - TE_n).$$

**FIG 2**

EP 0 342 508 A1

## Verfahren zum Erzeugen von Auslöseimpulsen

Die Erfindung betrifft ein Verfahren zum Erzeugen von Auslöseimpulsen gemäß Oberbegriff des Patentanspruchs.

Motorsteuersysteme benötigen zum Erzeugen von Auslöseimpulsen, die einen periodisch sich wiederholenden Vorgang einer Brennkraftmaschine - wie z.B. Zündung, Beginn des Schließwinkels, Kraftstoffeinspritzung - steuern, außer einem vorgegebenen Steuerwinkel, an dem der periodische Vorgang ablaufen soll, eine Information über die jeweilige Winkellage der Kurbelwelle oder der Nokkenwelle, bezogen auf eine Referenzmarke, wie z.B. den oberen Totpunkt. Dazu ist z.B. an der Kurbelwelle eine Zahnscheibe angebracht, die ein Geber abtastet. Dieser Geber liefert Winkelsignale, die der jeweiligen Winkellage der Kurbelwelle entsprechen.

Die Zahnteilung dieser Zahnscheibe bestimmt dabei die kleinstmögliche Auflösung, d.h einen kleinstmöglichen Vorgabebereich zwischen zwei vom Geber unterscheidbaren Winkellagen. Dazwischen liegende Steuerwinkel lassen sich nur durch eine Vorausberechnung bestimmen.

Für eine solche Vorausberechnung wird, wenn die Kurbelwelle einen der Vorgabebereiche durchlaufen hat, eine Rechenlaufzeit vorausberechnet, die sie zum Durchlaufen des nächstfolgenden Vorgabebereichs benötigt. Dabei ist angenommen, daß sich die Brennkraftmaschine mit konstanter Drehzahl weiterbewegt. Die Rechenlaufzeit ergibt sich dann durch eine lineare Extrapolation. Der Zeitpunkt an dem der Steuerwinkel erreicht ist wird schließlich durch eine lineare Interpolation in diesem Vorgabebereich ermittelt.

Wird die Brennkraftmaschine aber beschleunigt oder verzögert, so daß sich die Drehzahl ändert, so wird bei dieser Vorausberechnung ein mit dem Grad der Beschleunigung oder Verzögerung wachsender Fehler entstehen. Der Fehler ist auch umso größer, je größer der Vorgabebereich ist, so daß möglichst hochauflösende Zahnscheiben verwendet werden müssen.

Die Aufgabe der Erfindung besteht deshalb darin, bei einem Verfahren zum Erzeugen von Auslöseimpulsen die dabei benötigte Vorausberechnung des Zeitpunkts, an dem der Steuerwinkel erreicht wird, so auszuführen, daß sie auch bei einem groß angesetzten Vorgabebereich in allen Betriebszuständen der Brennkraftmaschine - konstante Drehzahl, Beschleunigung, Verzögerung - Werte mit guter Genauigkeit liefert. Trotzdem soll der Aufwand gering sein und der Wert für den vorausberechneten Zeitpunkt sehr schnell für die weitere Verarbeitung zur Verfügung stehen.

Die erfindungsgemäße Lösung ist im Patentanspruch gekennzeichnet.

Sie sieht vor, die Rechenlaufzeit aus einer einfachen Näherung zu bestimmen. Die Näherung stützt sich dabei jeweils auf eine gemessene Echtlaufzeit, die die Kurbelwelle für den gerade durchlaufenen Vorgabebereich gebraucht hat. Die gesuchte Laufzeit für den nächsten Vorgabebereich ergibt sich dann aus dieser Echtlaufzeit abzüglich eines Korrekturwerts. Dieser Korrekturwert ist gleich der Hälfte des absoluten Fehlers - vorherige Rechenlaufzeit minus gemessene Echtlaufzeit - bei der Vorausberechnung der Rechenlaufzeit für den vorausgegangenen Vorgabebereich. Ein Zielbereich ist derjenige Vorgabebereich, in dem der Steuerwinkel liegt. Der Zeitpunkt, an dem die Kurbelwelle innerhalb dieses Zielbereichs den Steuerwinkel erreicht, an dem der Auslöseimpuls erfolgen muß, ergibt sich dann in einfacher Weise aus dieser Rechenlaufzeit durch eine lineare Interpolation innerhalb des Zielbereichs.

Bei der Bestimmung der Rechenlaufzeit ist nur eine einfache Addition, eine Subtraktion und eine Division durch 2 nötig. Dementsprechend kann z.B. eine Hardware-Lösung aus einigen wenigen Komponenten bestehen, die aufgrund der einfachen Rechenoperationen die Rechenlaufzeit sehr schnell liefern können.

Da der Korrekturwert aus dem jeweiligen Fehler bei der Bestimmung der vorausgegangenen Rechenlaufzeit gewonnen wird, entsteht eine selbsttätige Korrektur, die das Verfahren in allen Betriebzuständen der Brennkraftmaschine gleichermaßen anwendbar macht. Die im Rahmen einer Motorsteuerung geforderte Genauigkeit für die Vorausberechnung der jeweiligen Laufzeit ist damit immer gegeben, gleich ob die Brennkraftmaschine mit konstanter Drehzahl läuft, oder ob sie beschleunigt oder verzögert wird. Wie Versuche gezeigt haben, gilt dies sogar für ungleichförmige Beschleunigungen oder Verzögerungen, da innerhalb kleiner Winkelbereiche die Beschleunigung bzw. Verzögerung mit guter Näherung als konstant betrachtet werden kann.

Die Erfindung wird anhand der Figuren näher erläutert. Dabei zeigen

FIG 1 ein Wegzeitdiagramm eines Beschleunigungsvorgangs zur Erläuterung des Verfahrens;

FIG 2 einen vergrößerten Ausschnitt aus FIG 1,

FIG 3 eine Anordnung zur Durchführung des Verfahrens, und

FIG 4 eine Meßtabelle mit Werten für Echtlaufzeiten und den jeweils zugehörigen Rechenlaufzeiten.

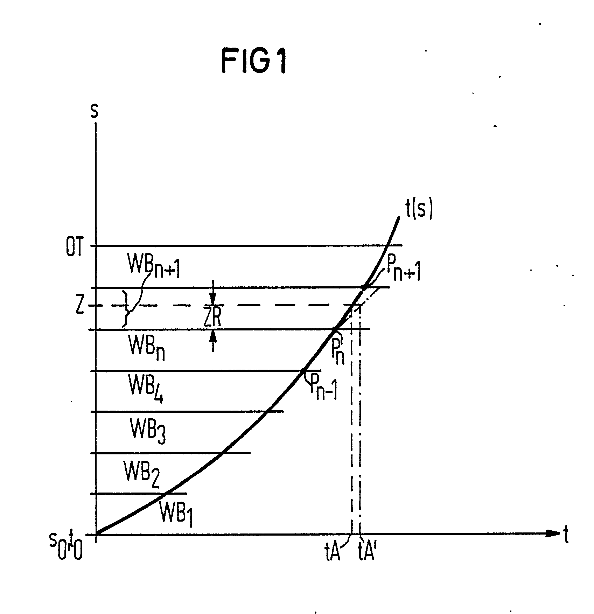

Die FIG 1 zeigt ein Wegzeitdiagramm mit dem Graphen t (s) einer gleichförmig beschleunigten Bewegung der Kurbelwelle einer Brennkraftmaschine. Auf der Ordinate sind Vorgabebereiche $WB_1$ bis $WB_n$ aufgetragen, die sich über gleich große Vorgabewinkel ZV erstrecken. Ein vorgegebener Steuerwinkel Z liegt in dem Vorgabebereich $WB_{n+1}$, bei dessen Erreichen ein Zeitpunkt tA für einen Auslöseimpuls gegeben ist. Auf dem Graphen t (s) sind drei Punkte $P_{n-1}$, $P_n$, $P_{n+1}$ eingezeichnet, die den Vorgabebereichen $WB_n$ und $WB_{n+1}$ zugeordnet sind.

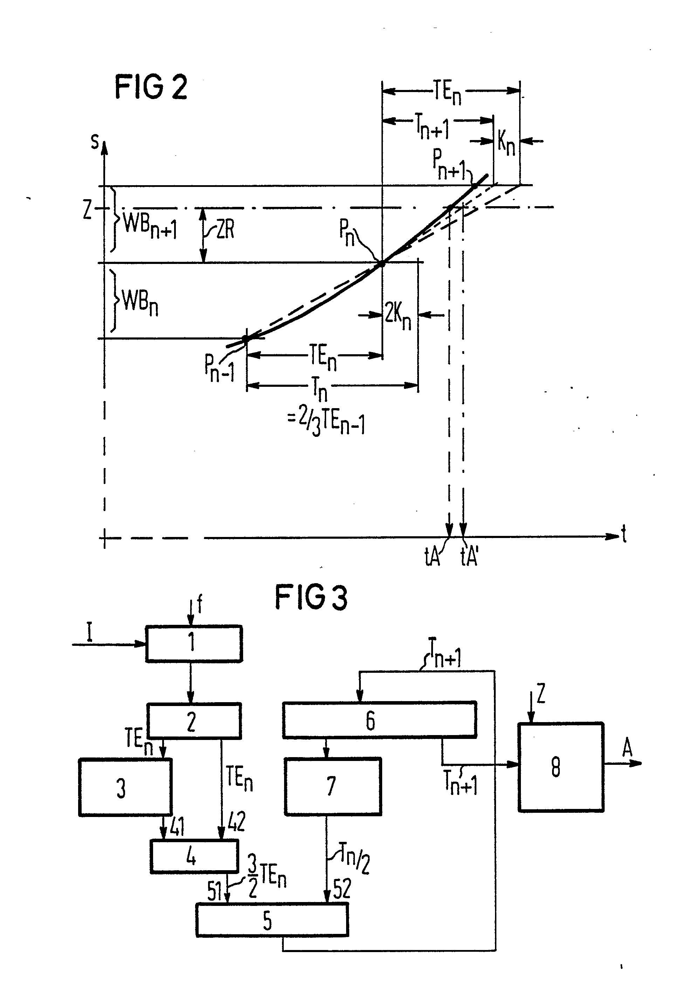

Im Beispiel soll das Verfahren für die Vorausberechnung der Rechenlaufzeit $T_{n+1}$ erläutert werden. Diese Rechenlaufzeit $T_{n+1}$ ist diejenige Zeit, die die Kurbelwelle voraussichtlich braucht, um den Vorgabebereich $WB_{n+1}$ zu durchlaufen. Sie wird berechnet, wenn die Kurbelwelle den Punkt $P_n$ erreicht hat. In der FIG 2 ist zur Verdeutlichung dieser Teil des Graphen t (s) vergrößert dargestellt. Eine Echtlaufzeit $TE_n$, die die Kurbelwelle zum Durchlaufen des vorhergegangenen Vorgabebereichs $WB_n$ gebraucht hat, wird gemessen. Die Rechenlaufzeit $T_{n+1}$ ergibt sich dann aus:

$$T_{n+1} = TE_n - K_n \text{ und}$$
$$K_n = 1/2 \times (T_n - TE_n).$$

$T_n$ ist dabei die vorhergehend berechnete Rechenlaufzeit, die im Punkt $P_{n-1}$ ermittelt wurde. Durch lineare Interpolation innerhalb des Vorgabebereichs $WB_{n+1}$ ergibt sich schließlich ein von dem idealen Auslösezeitpunkt tA nur geringfügig abweichender Auslösezeitpunkt tA'.

Anhand der FIG 3 wird eine Anordnung zur Durchführung des Verfahrens beschrieben. Eine Meßeinrichtung 1 erhält dabei Zählimpulse konstanter Folgefrequenz und Steuerimpulse I, die ein Geber von einer an der Kurbelwelle einer Brennkraftmaschine angebrachten Zahnscheibe mit äquidistanten Zähnen abtastet. Die Meßeinrichtung 1 ist ein Zähler, der durch die Steuerimpulse zu Beginn und Ende jedes Vorgabebereiches gestartet bzw. gestoppt wird. Nach dem Stoppen des Zählers ist sein Zählerstand der Echtlaufzeit $TE_n$ proportional, die die Kurbelwelle zum Durchlaufen des Vorgabebereichs $WB_n$ von z.B. 6° gebraucht hat. Die Meßeinrichtung 1 gibt diesen Zählerstand dann an ein Register 2 weiter und setzt den Zähler zurück.

Die Echtlaufzeit $TE_n$ liegt nun in dem Register 2 als Dualzahl vor. Sie wird dann einmal direkt auf einen der Addiereingänge 42 eines Addiergliedes 4 gegeben. Über eine Dividierstufe 3 erhält ein weiterer Addiereingang 41 des Addiergliedes 4 den durch 2 geteilten Wert der Echtlaufzeit $TE_n$. Am Ausgang des Addiergliedes 4 erscheint dann ein Wert von 3/2 $\times TE_n$.

Die Dividierstufe 3 besteht aus einer Verdrahtung, über die die Ausgänge des Registers 2 um eine Stelle nach rechts versetzt mit dem Eingang 41 verbunden sind: Dies kommt im Dualsystem einer Division durch Zwei gleich.

Der Wert von 3/2 $\times TE_n$ gelangt schließlich an einen Eingang 51 eines Subtrahiergliedes 5, das die Differenz aus dem Wert am Eingang 51 und einem Wert an einem zweiten Eingang 52 bildet. Dieser Wert an dem Eingang 52 ist beim ersten Durchlauf gleich Null, da er erst aus dem Ausgangswert des Subtrahiergliedes 5 gebildet wird. Wie später erläutert wird, steht an diesem Eingang 52 ab dem zweiten Durchlauf immer der halbe Wert der vorherberechneten Rechenlaufzeit $T_n$ an.

Das Subtrahierglied 5 bildet also die Vorausberechnung für die nächstfolgende Laufzeit $T_{n+1}$ gemäß der Gleichung

$$T_{n+1} = 3/2 \times TE_n - 1/2 \times T_n.$$

Vom Ausgang des Subtrahiergliedes 5 gelangt der vorausberechnete Wert für die nächstfolgende Laufzeit $T_{n+1}$ in ein Näherungsregister 6. Er steht dort an einem Abgriff zur weiteren Verarbeitung in einem Steuersystem 8 bereit. Über einen zweiten Ausgang des Näherungsregisters 6 gelangt der Wert der Laufzeit $T_{n+1}$ zu einer Dividierstufe 7, die eine Division durch Zwei ausführt. Diese Dividierstufe 7 ist analog der Dividierstufe 3 aufgebaut. Am Ausgang der Dividierstufe 7 steht dann der Wert von 1/2 $\times T_n$ an, der dann, wie oben erwähnt, an den Eingang 52 des Subtrahiergliedes 5 gelangt.

Das Steuersystem 8 ermittelt einen Zeitpunkt tA' für einen Auslöseimpuls A, der die Zündung oder einen Einspritzvorgang einer Brennkraftmaschine bewirkt. Im Beispiel erhält das Steuersystem 8 einen Steuerwinkel Z, der hier ein Zündwinkel ist, von einer weiteren (nicht gezeigten) Einrichtung, die den jeweils optima len Zündwinkel Z für die Brennkraftmaschine ermittelt. Das Steuersystem 8 bestimmt dann denjenigen der Vorgabebereiche $WB_{n+1}$ der Größe ZV, in dem dieser Zündwinkel Z liegt. Es bildet dazu eine Division Z/ZV. Ein ganzzahliger Teil des Ergebnisses dieser Division bezeichnet die Nummer des Vorgabebereichs $WB_{n+1}$, an (Rest = Null) oder nach (Rest ≠ Null) dessen Ende der Zündwinkel Z liegt. Ein eventueller Rest dieser Division bestimmt den Zündwinkel Z innerhalb dieses Vorgabebereichs $WB_{n+1}$. Der Zeitpunkt tA', an dem das Steuersystem 8 den Auslöseimpuls A für die Zündung abgeben muß, da dann die Kurbelwelle den Zündwinkel Z erreicht hat, bestimmt sich durch eine lineare Interpolation innerhalb des Vorgabebereichs $WB_{n+1}$ mit der Größe ZV ausgehend von der vorausberechneten Laufzeit $T_{n+1}$ zu

$$tA = ZB/ZV \times T_{n+1}.$$

Die Vorausberechnung der Laufzeit $T_{n+1}$ gemäß vorgeschlagenen Verfahren kann natürlich auch durch eine andere, äquivalent wirkende Anordnung ersetzt werden. Falls in dem Motorsteuerungssystem genügend Rechenkapazität zur Verfügung steht, kann anstelle einer Hardware-Lösung auch eine Programmroutine verwendet werden.

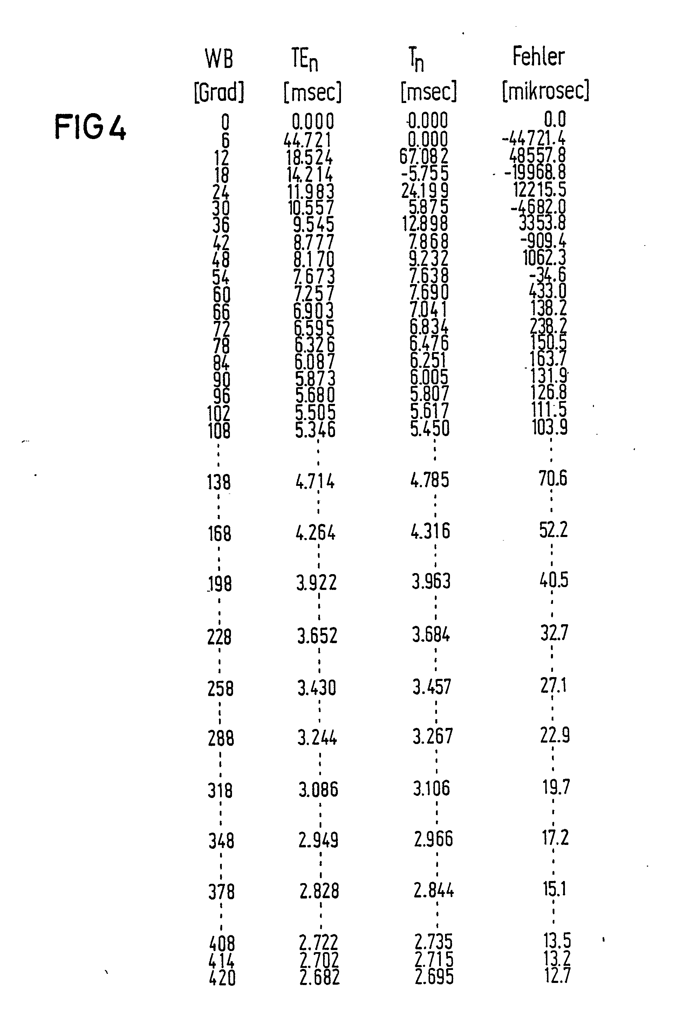

In FIG 4 findet sich schließlich ein Zahlenbeispiel für mit dem vorgeschlagenen Verfahren vorausberechnete Rechenlaufzeiten $T_{n+1}$ bei linear beschleunigter Bewegung. In der ersten Spalte sind die Werte für die aufeinanderfolgenden äquidistanten Vorgabebereiche $WB_n$ mit einem Vorgabewinkel ZV von 6° aufgetragen. In Spalte 2 stehen die jeweils zugehörigen Werte für die Echtlaufzeit $TE_n$. Die Spalte 3 beinhaltet den jeweils zugehörigen, gemäß dem Verfahren vorausberechneten Wert der Rechenlaufzeit $T_n$. Die Spalte 4 enthält schließlich den absoluten Fehler des Werts der jeweiligen vorausberechneten Rechenlaufzeit $T_n$ bezüglich des Werts der Echtlaufzeit $TE_n$.

Aus der FIG 4 ist zu erkennen, daß der absolute Fehler beim Start des Verfharens relativ groß ist und dann immer kleiner wird. Bereits nachdem die Kurbelwelle einen Winkel von 102° zurückgelegt hat, beträgt dieser absolute Fehler nur noch 111,5 μs, was bezogen auf die Echtlaufzeit $TE_n$ von 5,505 ms nur noch einem relativen Fehler von 2 entspricht. Dies zeigt, daß mit diesem Verfahren nach dem Start bereits ab ungefähr 100° Kurbelwellendrehung ausreichend genaue und immer genauer werdende Werte geliefert werden.

## Ansprüche

1. Verfahren zum Erzeugen von Auslöseimpulsen (A) an zugeodneten Auslösezeitpunkten tA zur Steuerung periodisch sich wiederholender Vorgänge einer Brennkraftmaschine, bei dem die Winkellage der Kurbelwelle, an der ein Auslöseimpuls (A) erzeugt werden soll, bezogen auf eine Referenzmarke (SO) durch einen Steuerwinkel (Z) mittels linearer Extrapolation bestimmt wird,

**dadurch gekennzeichnet,**

daß ausgehend von der Referenzmarke (SO) nach jeder Drehung der Kurbelwelle um einen Vorgabewinkel (ZV) durch einen dadurch bestimmten Vorgabebereich WB die hierfür benötigte Echtlaufzeit $TE_n$ gemessen, daraus die voraussichtliche Laufzeit $T_{n+1}$ - nachfolgend Rechenlaufzeit genannt - für die weitere Drehung der Kurbelwelle durch den nächsten Vorgabebereich $WB_{n+1}$ nach der Formel

$T_{n+1} = TE_n - K_n$

mit $K_n = 1/2 (T_n - TE_n)$

vorausberechnet wird, daß derjenige Vorgabebereich - im folgenden Zielbereich genannt - ermittelt wird, in welchem der Steuerwinkel (Z) liegt und wie groß der Restwinkel ZR zwischen dem Beginn des Zielbereiches und dem Steuerwinkel (Z) ist, und daß der Auslösezeitpunkt tA jedes Auslöseimpulses (A) gerechnet vom Beginn des Zielbereiches bestimmt wird nach
$tA = \frac{ZR}{ZV} \times T_{n+1}$.

# FIG 1

## FIG 2

$$s$$

$$TE_n$$

$$T_{n+1}$$

$$K_n$$

$$P_{n+1}$$

$$Z$$

$$WB_{n+1}$$

$$ZR$$

$$P_n$$

$$WB_n$$

$$2K_n$$

$$TE_n$$

$$P_{n-1}$$

$$T_n$$

$$=2/3 TE_{n-1}$$

$$t$$

$$tA \quad tA'$$

## FIG 3

$$f$$

$$I \longrightarrow \boxed{1}$$

$$\boxed{2}$$

$$TE_n$$

$$TE_n$$

$$\boxed{3}$$

$$\boxed{6}$$

$$T_{n+1}$$

$$Z$$

$$\boxed{7}$$

$$\boxed{8} \longrightarrow A$$

$$T'_{n+1}$$

$$41 \quad 42$$

$$\boxed{4}$$

$$\frac{3}{2} TE_n$$

$$51 \quad 52$$

$$T_{n/2}$$

$$\boxed{5}$$

EP 0 342 508 A1

**FIG 4**

| WB<br>[Grad] | TEn<br>[msec] | Tn<br>[msec] | Fehler<br>[mikrosec] |
|---|---|---|---|
| 0 | 0.000 | 0.000 | 0.0 |
| 6 | 44.721 | 0.000 | -44721.4 |
| 12 | 18.524 | 67.082 | 48557.8 |
| 18 | 14.214 | -5.755 | -19968.8 |
| 24 | 11.983 | 24.199 | 12215.5 |
| 30 | 10.557 | 5.875 | -4682.0 |
| 36 | 9.545 | 12.898 | 3353.8 |
| 42 | 8.777 | 7.868 | -909.4 |
| 48 | 8.170 | 9.232 | 1062.3 |
| 54 | 7.673 | 7.638 | -34.6 |
| 60 | 7.257 | 7.690 | 433.0 |
| 66 | 6.903 | 7.041 | 138.2 |
| 72 | 6.595 | 6.834 | 238.2 |
| 78 | 6.326 | 6.476 | 150.5 |
| 84 | 6.087 | 6.251 | 163.7 |
| 90 | 5.873 | 6.005 | 131.9 |
| 96 | 5.680 | 5.807 | 126.8 |
| 102 | 5.505 | 5.617 | 111.5 |
| 108 | 5.346 | 5.450 | 103.9 |
| 138 | 4.714 | 4.785 | 70.6 |
| 168 | 4.264 | 4.316 | 52.2 |
| 198 | 3.922 | 3.963 | 40.5 |
| 228 | 3.652 | 3.684 | 32.7 |
| 258 | 3.430 | 3.457 | 27.1 |
| 288 | 3.244 | 3.267 | 22.9 |
| 318 | 3.086 | 3.106 | 19.7 |
| 348 | 2.949 | 2.966 | 17.2 |
| 378 | 2.828 | 2.844 | 15.1 |
| 408 | 2.722 | 2.735 | 13.5 |
| 414 | 2.702 | 2.715 | 13.2 |
| 420 | 2.682 | 2.695 | 12.7 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 150 642 (AUTOMOBILES CITROEN & AUTOMOBILES PEUGEOT) * Titelseite; Ansprüche 1,2; Seite 11 * | 1 | F 02 P 7/06 G 01 M 15/00 |
| A | PATENT ABSTRACTS OF JAPAN, Band 5, Nr. 143 (M-87)[815], 9. September 1981, Seite 129 M 87; & JP-A-56 75 963 (MATSUSHITA DENKI SANGYO K.K.) 23-06-1981 | 1 | |
| A | PATENT ABSTRACTS OF JAPAN, Band 9, Nr. 135 (M-386)[1858], 11. Juni 1985, Seite 106 M 386; & JP-A-60 17 269 (MITSUBISHI DENKI K.K.) 29-01-1985 | 1 | |
| A | PATENT ABSTRACTS OF JAPAN, Band 9, Nr. 114 (M-380)[1837], 18. Mai 1985, Seite 88 M 380; & JP-A-60 1376 (KAWASAKI JUKOGYO K.K.) 07-01-1985 | 1 | |
| A | EP-A-0 085 909 (NISSAN MOTOR CORP.) * Figuren 1,5,7; Titelseite; Seite 23 * | 1 | RECHERCHIERTE SACHGEBIETE (Int. Cl.4) |
| A | EP-A-0 240 858 (HITACHI) | | F 02 P G 01 M |
| A | EP-A-0 242 994 (GENERAL MOTORS CORP.) | | |
| A | US-A-4 158 305 (W.W. SHIPLEY) | | |

Der vorliegende Recherchenbericht wurde für alle Patentansprüche erstellt

| Recherchenort | Abschlußdatum der Recherche | Prüfer |
|---|---|---|
| DEN HAAG | 21-08-1989 | LEROY C.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.................................................................
& : Mitglied der gleichen Patentfamilie, übereinstimmendes Dokument

EPO FORM 1503 03.82 (P0403)